# EUROPEAN PATENT SPECIFICATION

(11) **EP 3 415 793 B1**
(45) Date of publication and mention of the grant of the patent: **16.09.2020**
(21) Application number: 17176253.7
(22) Date of filing: 15.06.2017
(51) Int. Cl.: F16H 48/38, F16H 57/037

(54) **MOUNTING MEMBER FOR DIFFERENTIALS**
MONTAGEELEMENT FÜR DIFFERENTIALE
ÉLÉMENT DE MONTAGE POUR DIFFÉRENTIELS

(43) Date of publication of application: 19.12.2018
(73) Proprietor: Meritor Heavy Vehicle Systems Cameri SpA, 28062 Cameri (NO) (IT)
(72) Inventor: SIVADOSS, Karthik Raj, 560059 Karnataka (IN); KARUNANIDHI, Manjunath, 560059 Karnataka (IN); PRASHANTH, Kuruba, 560059 Karnataka (IN); BIONAZ, Davide, 242-3231 Novara (IT); SANTINATO, Fabio, 242-3231 Novara (IT); BEHERA, Rajakishore, SE-71134 Lindesbertg, KRN (SE)
(74) Representative: Whitfield, Jack Stephen

(56) References cited:
- US-A1- 2009 082 162
- US-A1- 2010 093 482
- US-A1- 2011 136 611
- US-B1- 7 059 215

## Description

### Technical Field

The present invention relates to a mounting member for differentials, particularly but not exclusively, to mounting members used in differentials of commercial vehicles such as heavy goods vehicles. Further, the present invention relates to a method of assembling a differential carrier assembly. Such a mounting member and method is known from US2009082162A.

### Background

Known differentials include several components for distribution of a drive torque to the half-shafts of the vehicle, the primary ones being a differential carrier, a drive shaft connected to a pinion gear of an input pinion, a ring gear, and a differential casing, connected to the ring gear. Several of these components are rotatably mounted on bearings, and it is important to ensure the correct pre-load on certain bearings during assembly. For example, the input pinion and the differential casing are rotationally supported by the differential carrier. To this end, the differential carrier comprises several openings or cavities acting as bearing housings that receive corresponding drive shaft bearings and differential case bearings. In particular, it is known to provide first and second openings within the differential carrier that receive first and second differential case bearings for rotatably mounting the differential casing about a differential axis, which is aligned with half shafts of the vehicle. Further openings, which extend perpendicular to the first and second openings house bearings for the input pinion. A spigot bearing receives a spigot protruding from front end of the input pinion, in a distal direction from the pinion gear. One or more further bearings are arranged behind on a back end of the input pinion, that is, behind the pinion gear. In other words, the pinion gear is rotatably mounted at the front and back ends of the input gear. Particularly differentials of commercial vehicles, such as trucks, comprise differential lock assemblies, which can act to deactivate the differential mechanism should this be required the operator. Differential locking assemblies usually comprise a pneumatic cylinder for activation of the differential lock. The pneumatic cylinder is connected to the differential carrier and requires further cavities to be introduced into the differential carrier to enable movement of a piston of the pneumatic cylinder.

Differential carriers are conventionally produced by means of casting. As will be appreciated, it is necessary to provide several cores to form the multitude of cavities or openings discussed above. There are many types of cores available, such as sand cores, bentonite clay, pulverised coal, etc, however it is a known disadvantage that each core results in additional manufacturing costs for the differential carrier.

In view of the above, it is an object of the present invention to overcome the shortcomings of the prior art and reduce the amount of cores required during the manufacturing process of differential carriers.

### Summary of the Invention

Embodiments of the invention provide a mounting member for differentials and a method of assembling a differential carrier assembly as claimed in the appended claims.

According to the present invention, there is provided a mounting member disclosing the features of claim 1.

In simple terms, the mounting member of the present invention is not an integral part of the differential carrier. That is, the mounting member is manufactured in a separate process, independent of the differential carrier. Once manufacture (e.g. casting) of the mounting member and the differential carrier is completed, the mounting member can be removably connected to the differential carrier. Since the mounting member comprises openings for supporting the differential casing and the piston rod of a differential lock assembly, the differential carrier can be manufactured with less openings/cavities, requiring less sand cores during the casting process. In a way, the mounting member enables some of the openings for supporting the differential casing and the differential lock assembly to be retrofitted to the differential carrier during the assembly process of the differential. Consequently, the new mounting member not only reduces the cost for manufacture of the differential carrier but also simplifies the assembly process of the differential.

In another embodiment, the first and second openings extend in parallel directions. This layout of the mounting member will guarantee that the piston rod and a corresponding shift fork of the differential lock assembly are guided in parallel with the differential axis, i.e. in parallel with the half shafts of the vehicle. Furthermore, arranging the first and second opening in parallel simplifies manufacture of the mounting member as the first and second openings can be produces as bores, drilled at the same time, in the same direction.

The mounting member may be formed as a unitary component. In another embodiment, the mounting member may be formed by a casting process. This will further reduce the manufacturing cost of the mounting member and provide highly reliable alignment of the differential casing with the differential lock assembly, which is of great importance for the function of the differential lock assembly.

According to yet another embodiment, the means for removably connecting the mounting member to the differential carrier include a plurality of mounting holes. The mounting holes may extend in a substantially perpendicular direction to the first opening. Therefore, the mounting holes preferably also extend in a perpendicular direction to the second opening and provide sufficient support for the differential casing and the piston rod of the differential lock assembly within the differential carrier.

The mounting member may comprise a third opening configured as a second bearing housing adapted to receive a drive shaft bearing. In other words, the mounting member may not only be adapted to support the differential casing and the differential lock assembly but may also provide cavities for receiving parts of the input pinion. In particular, the third opening may be configured to receive the front end of input pinion within a corresponding spigot bearing. This variant of the mounting member further reduces the cavities required during the manufacturing process of the differential carrier. The third opening may extend in the substantially perpendicular direction to the first opening, which will allow for a ring gear of the differential casing to be arranged at a substantially right-angle with respect to the pinion gear.

According to the present invention, there is provided a differential assembly comprising a differential carrier and a mounting member as described hereinbefore, the mounting member being removably attached to the differential carrier. The differential assembly comprises a differential casing. The differential casing is rotatably supported by a differential case bearing for rotation about a differential axis. The differential case bearing is received within the first opening of the mounting member. The differential assembly further comprises a differential lock assembly comprising a linear actuator with a piston rod. A first end of the piston rod is received within the second opening for longitudinal movement of the piston rod between open and closed states of the differential lock assembly. Rather than the first end of the piston rod being received within an opening of the differential carrier, the piston rod can be guided by the separate mounting member of the present invention.

The differential assembly may comprise a piston attached to a second end of the piston rod, opposite the first end of the piston rod. The piston may be received within a cylinder of the differential lock assembly, wherein the cylinder may be an integral part of the differential carrier. Alternatively, it is also feasible to construct the cylinder of the differential lock assembly as a separate part, which can be removably attached to the differential carrier. In any case, the second opening of the mounting member will ensure that the movement of the piston within the cylinder of the differential lock assembly is aligned with the differential axis of the differential casing and half shafts of the vehicle. According to another embodiment, the differential assembly comprises an input pinion having a pinion gear in meshing engagement with a ring gear of the differential casing and a spigot protruding from a front end of the pinion gear. The mounting member comprises a third opening configured as a second bearing housing, the spigot being received in a spigot bearing for rotation about a drive shaft axis, the spigot bearing being received within the third opening.

According to the present invention, there is provided a method of assembly a differential carrier assembly, including the steps of claim 13.

The method may further comprise providing a third opening in the mounting member, extending perpendicular to the first opening and inserting a spigot of an input pinion together with a spigot bearing into the third opening, after the mounting member is attached to the differential carrier.

### Brief description of the Drawings

One or more embodiments of the invention will now be described, by way of example only, with reference to the accompanying drawings, in which:
FIGURE 1 shows a cross-section of a differential assembly according to an embodiment of the present invention;
FIGURE 2a shows a cross-section of a mounting member according to an embodiment of the present invention;
FIGURE 2b shows a perspective view of the mounting member of Figure 2a; and
FIGURE 3 shows a cross-section of a differential carrier and the mounting member according to the embodiment of Figures 2a and 2b;

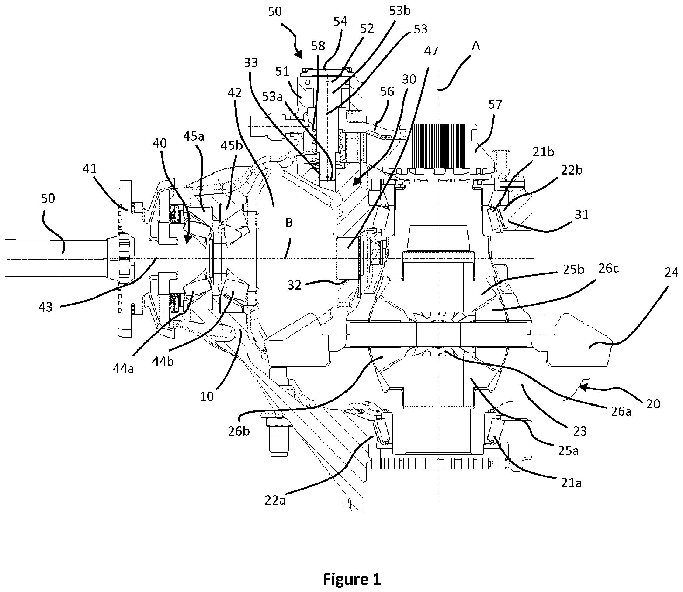

Turning to Figure 1, there is shown a cross-section of a differential assembly 1 according to an embodiment of the present invention. The differential assembly 1 comprises a differential carrier 10 and a differential casing 20. The differential casing 20 is rotatably received within the differential carrier 10. In particular, the differential casing 20 is rotatable about a differential axis A. The differential axis A is also the axis along which half shafts (not shown) of the vehicle extend. The differential casing 20 is rotatably received within first and second case bearings 21a and 21b. A first case bearing 21a is connected to a first end of the differential casing 20, whereas a second case bearing 21b is connected to a second, opposite end of the differential casing 20. The first case bearing 21a comprises an outer bearing race 22a, which is received within an opening of the differential carrier 10. As will be described in more detail below, the second case bearing 21b comprises an outer bearing race 22b, which is received in a first opening 31 of a separate mounting member 30.

The differential casing 20 comprises a housing structure 23 connected to a ring gear (or crown wheel) 24. The housing 23 of the differential casing 20 encloses and supports first and second side gears 25a, 25b. It will be understood that, in use, the side gears 25a and 25b are connected to respective half shafts of the vehicle in order to distribute the torque of a drive shaft 50 across the half shafts (not shown). As is conventionally known, the differential casing further houses a plurality of spider gears 26a, 26b, 26c. In this particular embodiment, four spider gears (only three shown) are provided. However, it will be understood that the invention is not restricted to this number of spider gears; rather, any number of spider gears may be implemented that facilitates torque vectoring.

An input pinion 40 is rotatably supported about a drive shaft axis B. The input pinion 40 is connected to a drive shaft 50, which is configured to transfer the torque of an engine transmission to the differential assembly 1. To this end, the input pinion 40 comprises a drive shaft connector 41 connected to a pinion gear 42 via shaft portion 43. Shaft portion 43, which extends between the connector portion 41 and the pinion gear 42 is rotatably supported within the differential carrier 10. In this particular embodiment, it is connected to the differential carrier 10 via first and second shaft bearings 44a, 44b. The first and second shaft bearings 44a, 44b comprise outer bearing races 45a, 45b, received within corresponding cavities of the differential carrier 10.

The pinion gear 42 is arranged in meshing contact with the ring gear 24 of the differential casing. The input pinion 40 comprises a spigot 47 protruding from a front end of the pinion gear 42. The spigot 47 is rotatably received within another opening 32 of the mounting member 30. For example, the spigot 47 may be received within opening 32 via a spigot bearing. As such, the mounting member 30 of the differential carrier assembly shown in Figure 1 supports the differential casing 20 via the second case bearing 21b and, at the same time, supports the front end of input pinion 40 via a spigot bearing received within opening 32.

The differential carrier assembly 1 comprises a differential lock assembly 50. The differential lock assembly 50 is constructed as a pneumatic cylinder and comprises a cylinder housing 51, which is divided into two separate chambers by a piston 52. The cylinder housing 51 of the embodiment shown in Figure 1 is formed as an integral part of the differential carrier 10. A back end, which faces away from the differential carrier 10, is covered by end cap 54, which may include an air inlet port for actuation of the piston 52. A piston rod 53 extends from the piston 52 towards the input pinion 40, in a direction parallel to the differential axis A. The piston shaft 53 has a first end 53a received in another opening 33 of mounting member 30. An opposite, second end 53b of the piston rod 53 is connected to the piston 52.

As is conventionally known, a shift fork 56 connects the piston rod 53 with a differential lock clutch 57 such that the differential lock clutch 57 moves together with the piston rod 53 in a longitudinal direction, along differential axis A. The function of a differential lock is well known and therefore does not require any further description. It is, however, essential to note that the first, free end 53a of the piston rod 53 is received within the separate mounting member 30 and not within a cavity of the differential carrier 10. In fact, the opening 33 of the mounting member 30 will act to guide the first end 53 of piston rod 53 along a longitudinal direction, parallel to the differential axis A.

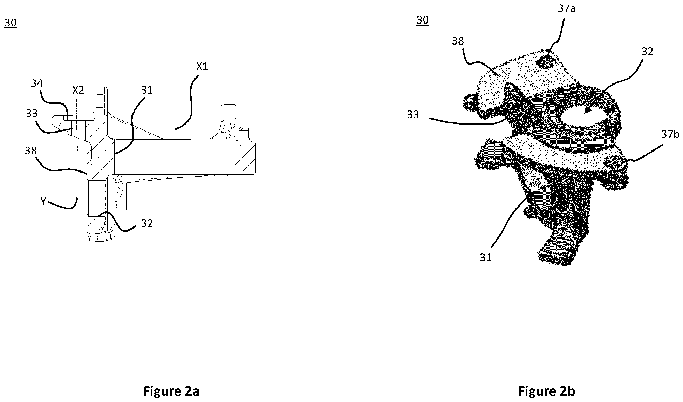

As is conventionally known, the piston 52 is biased towards an open position of the differential lock assembly 50 and can be moved into its closed position by application of pressurised air via end cap 54. It should also be noted that the piston rod 53 comprises a shoulder portion 58 arranged between the first and second end 53a, 53b. The shoulder portion 58 is adapted to engage a stop flange 34 (Figure 2a) of the mounting member 30 to limit movement of the piston rod 53, once the closed position of the differential lock assembly 50 has been reached. Consequently, the mounting member 30 not only guides the second end 53a of the piston rod 53 but also serves as an end stop for the closed position of the differential locking assembly 50. Figures 2a and 2b show a different view of a mounting member 30 according to an embodiment of the present invention.

A cross-section of the mounting member 30, which corresponds to the cross-section shown in Figure 1, is shown in greater detail in Figure 2a. The mounting member 30 comprises a first opening 31 extending through the mounting member 30 in a first direction X. As described hereinbefore, the first opening 31 is arranged to support one end of the differential casing 20 via second end bearing 21b. A second opening 33 extends in the same direction as the first opening 31 and is therefore arranged along an axis X2, which is parallel to axis X1 of the first opening 31. The second opening 33 is arranged to guide the first end 53a of piston rod 53 and comprises a stop flange 34, which is arranged to engage with shoulder portion 58 of piston rod 53 in the closed position of the differential locking assembly. Stop flange 34 may also act as a bearing surface for the return spring shown in Figure 1.

A third opening 32 extends in a direction perpendicular to the direction of the first and second openings 31, 33. That is, the third opening 32 extends along axis Y, which is perpendicular to axis X1 and X2. As described in more detail hereinbefore, the second opening 32 is arranged to receive spigot 47 of the input pinion 40.

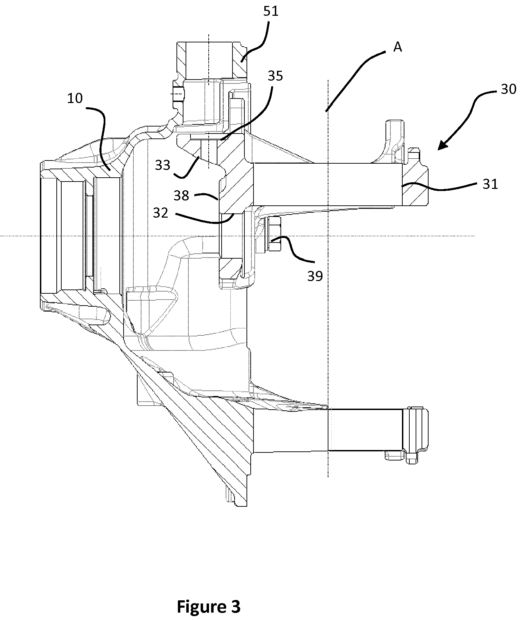

As can be derived from Figure 3b, mounting member 30 comprises two mounting holes 37a and 37b by means of which the mounting member 30 can be removably attached to the differential carrier 10. In order to attach mounting member 30 to the differential carrier 10, a flange surface 38 of the mounting member 30 is brought into engagement with a corresponding flange hinge surface (not shown) of the differential carrier 10 and mounting holes 37a and 37b are aligned with mounting holes of the differential carrier 10 (not shown). Subsequently, the mounting member 30 is connected to the differential carrier 10 via fastening bolts 39.

Figure 3 further shows that, once the mounting member is connected to the differential carrier 10, axis X1 of the first opening 31 is automatically aligned with differential axis A, whereas axis Y of the third opening 32 is automatically aligned with axis B of the input pinion.

## Claims

1. Mounting member (30) for a differential, the mounting member (30) comprising:
a first opening (31) configured as a first bearing housing arranged to receive a differential case bearing (21b); and
a second opening (33) arranged to guide a piston rod (53) of a differential lock assembly (50),
**characterised in that** the mounting member (30) comprises means for removably connecting the mounting member (30) to a differential carrier (10) of the differential.

2. The mounting member (30) of claim 1, wherein the first (31) and second (33) openings extend in parallel directions.

3. The mounting member (30) of claim 1 or 2, wherein the mounting member (30) is formed as a unitary component.

4. The mounting member (30) of claim 3, wherein the mounting member (30) is formed by casting.

5. The mounting member (30) of any of the preceding claims, wherein the means for removably connecting the mounting member (30) to the differential carrier (10) include a plurality of mounting holes (37a, 37b).

6. The mounting member (30) of any of the preceding claims, wherein the mounting member (30) comprises a third opening (32) configured as a second bearing housing adapted to receive a drive shaft bearing.

7. The mounting member (30) of claim 7, wherein the third opening (32) extends in a substantially perpendicular direction to the first opening (31).

8. A differential assembly (1) comprising:
a differential carrier (10);
a mounting member (30) of any of claims 1 to 8, the mounting member (30) being removably attached to the differential carrier (10);
a differential casing (20) being rotatably supported by a differential case bearing (21b) for rotation about a differential axis, the differential case bearing (21b) being received within the first opening (31) of the mounting member (30);
a differential lock assembly (50) comprising a linear actuator with a piston rod (53), a first end (53a) of the piston rod being received within the second opening (33) for longitudinal movement of the piston rod (53) between open and closed states of the differential lock assembly (50).

9. The differential assembly (1) of claim 8 or 9, wherein the differential lock assembly (1) comprises a piston (52) attached to a second end (53b) of the piston rod (53), opposite the first end (53a) of the piston rod (53).

10. The differential assembly (1) of claim 10, wherein the piston (52) is received within a cylinder of the differential lock assembly, and wherein said cylinder (51) is an integral part of the differential carrier.

11. The differential assembly (1) of claim any of claims 9 to 11, wherein the differential assembly (1) comprises an input pinion (40) having a pinion gear (42) in meshing engagement with a ring gear (24) of the differential casing (20) and a spigot (47) protruding from a front end of the pinion gear (42), and wherein the mounting member comprises a third opening (32) configured as a second bearing housing, the spigot (47) being received in a spigot bearing for rotation about a drive shaft axis, the spigot bearing being received within the third opening (32).

12. The differential assembly (1) of claim 12, wherein the drive pinion axis extends in a substantially perpendicular direction to the differential axis.

13. A method of assembling a differential carrier assembly, including the steps of:
h) providing a differential carrier (10);
i) providing a mounting member (30) comprising a first (31) and second (33) opening;
j) providing a differential casing (20) and at least one differential case bearing (21b);
k) providing a differential lock assembly (50) comprising a linear actuator with a piston rod (53);
l) inserting the differential case bearing (21b) together with the differential casing (20) into the first opening (31) of the mounting member (50); **characterised in that** the method also includes the steps of
m) attaching the mounting member (50) to the differential carrier (10);
n) inserting the piston rod (33) into the second opening (33) of the mounting member (50).

14. The method of claim 14, wherein the mounting member (50) comprises a third opening (32), extending perpendicular to the first opening (31), and wherein the method includes inserting a spigot (47) of an input pinion (40) together with a spigot bearing into the third opening (32), after the mounting member (50) is attached to the differential carrier (10).

## Patentansprüche

1. Montageelement (30) für ein Differential, wobei das Montageelement (30) umfasst:
eine erste Öffnung (31), die als ein erstes Lagergehäuse ausgestaltet ist, das angeordnet ist, ein Differentialgehäuselager (21b) aufzunehmen; und
eine zweite Öffnung (33), die angeordnet ist, eine Kolbenstange (53) einer Differentialsperrenbaugruppe (50) zu führen,
**dadurch gekennzeichnet, dass** das Montageelement (30) Mittel zum entfernbaren Verbinden des Montageelements (30) mit einem Differentialkorb (10) des Differentials umfasst.

2. Montageelement (30) nach Anspruch 1, wobei die erste (31) und zweite (33) Öffnung in parallele Richtungen verlaufen.

3. Montageelement (30) nach Anspruch 1 oder 2, wobei das Montageelement (30) als eine einstückige Komponente ausgebildet ist.

4. Montageelement (30) nach Anspruch 3, wobei das Montageelement (30) durch Gießen ausgebildet ist.

5. Montageelement (30) nach einem der vorhergehenden Ansprüche, wobei die Mittel zum entfernbaren Verbinden des Montageelements (30) mit dem Differentialkorb (10) eine Mehrzahl von Montagelöchern (37a, 37b) umfassen.

6. Montageelement (30) nach einem der vorhergehenden Ansprüche, wobei das Montageelement (30) eine dritte Öffnung (32) umfasst, die als ein zweites Lagergehäuse ausgestaltet ist, das ausgelegt ist, ein Antriebswellenlager aufzunehmen.

7. Montageelement (30) nach Anspruch 7, wobei die dritte Öffnung (32) in einer im Wesentlichen senkrechten Richtung zu der ersten Öffnung (31) verläuft.

8. Differentialbaugruppe (1), umfassend:
einen Differentialkorb (10);
ein Montageelement (30) nach einem der Ansprüche 1 bis 8, wobei das Montageelement (30) entfernbar an dem Differentialkorb (10) angebracht ist;
ein Differentialgehäuse (20), das drehbar durch ein Differentialgehäuselager (21b) zur Drehung um eine Differentialachse gelagert ist, wobei das Differentialgehäuselager (21b) in der ersten Öffnung (31) des Montageelements (30) aufgenommen ist;
eine Differentialsperrenbaugruppe (50), umfassend einen Linearaktor mit einer Kolbenstange (53), wobei ein erstes Ende (53a) der Kolbenstange in der zweiten Öffnung (33) für eine Längsbewegung der Kolbenstange (53) zwischen geöffneten und geschlossenen Zuständen der Differentialsperrenbaugruppe (50) aufgenommen ist.

9. Differentialbaugruppe (1) nach Anspruch 8 oder 9, wobei die Differentialsperrenbaugruppe (1) einen Kolben (52) umfasst, der an einem zweiten Ende (53b) der Kolbenstange (53), gegenüber dem ersten Ende (53a) der Kolbenstange (53) angebracht ist.

10. Differentialbaugruppe (1) nach Anspruch 10, wobei der Kolben (52) in einem Zylinder der Differentialsperrenbaugruppe aufgenommen ist, und wobei der Zylinder (51) ein integraler Bestandteil des Differentialkorbs ist.

11. Differentialbaugruppe (1) nach einem der Ansprüche 9 bis 11, wobei die Differentialbaugruppe (1) ein Antriebskegelrad (40) mit einem Kegelritzel (42) in Zahneingriff mit einem Zahnkranz (24) des Differentialgehäuses (20) und einen von einem vorderen Ende des Kegelritzels (42) hervorstehenden Zapfen (47) umfasst, und wobei das Montageelement eine dritte Öffnung (32) umfasst, die als ein zweites Lagergehäuse ausgestaltet ist, wobei der Zapfen (47) in einem Zapfenlager zur Drehung um eine Antriebswellenachse aufgenommen ist, wobei das Zapfenlager in der dritten Öffnung (32) aufgenommen ist.

12. Differentialbaugruppe (1) nach Anspruch 12, wobei die Antriebsritzelachse in einer im Wesentlichen senkrechten Richtung zu der Differentialachse verläuft.

13. Verfahren zum Zusammenbauen einer Differentialkorbbaugruppe, umfassend die folgenden Schritte:
h) Bereitstellen eines Differentialkorbs (10);
i) Bereitstellen eines Montageelements (30) umfassend eine erste (31) und zweite (33) Öffnung;
j) Bereitstellen eines Differentialgehäuses (20) und mindestens eines Differentialgehäuselagers (21b);
k) Bereitstellen einer Differentialsperrenbaugruppe (50) umfassend einen Linearaktor mit einer Kolbenstange (53);
l) Einsetzen des Differentialgehäuselagers (21b) zusammen mit dem Differentialgehäuse (20) in die erste Öffnung (31) des Montageelements (50);
**dadurch gekennzeichnet, dass** das Verfahren zudem die folgenden Schritte umfasst:
m) Anbringen des Montageelements (50) an dem Differentialkorb (10);
n) Einsetzen der Kolbenstange (33) in die zweite Öffnung (33) des Montageelements (50).

14. Verfahren nach Anspruch 14, wobei das Montageelement (50) eine dritte Öffnung (32) umfasst, die sich senkrecht zu der ersten Öffnung (31) erstreckt, und wobei das Verfahren Einsetzen eines Zapfens (47) eines Antriebskegelrads (40) zusammen mit einem Zapfenlager in die dritte Öffnung (32), nachdem das Montageelement (50) an dem Differentialkorb (10) angebracht ist, umfasst.

## Revendications

1. Élément de montage (30) pour un différentiel, l'élément de montage (30) comprenant :
une première ouverture (31) configurée sous la forme d'un premier boîtier de palier agencé pour recevoir un palier de boîte de différentiel (21b) ; et
une deuxième ouverture (33) agencée pour guider une tige de piston (53) d'un ensemble verrou de différentiel (50),
**caractérisé en ce que** l'élément de montage (30) comprend des moyens pour connecter de manière amovible l'élément de montage (30) à un support de différentiel (10) du différentiel.

2. Élément de montage (30) de la revendication 1, dans lequel la première (31) et la deuxième (33) ouverture s'étendent dans des directions parallèles.

3. Élément de montage (30) de la revendication 1 ou 2, dans lequel l'élément de montage (30) est formé sous la forme d'un composant unitaire.

4. Élément de montage (30) de la revendication 3, dans lequel l'élément de montage (30) est formé par moulage.

5. Élément de montage (30) de l'une quelconque des revendications précédentes, dans lequel les moyens pour connecter de manière amovible l'élément de montage (30) au support de différentiel (10) incluent une pluralité de trous de montage (37a, 37b).

6. Élément de montage (30) de l'une quelconque des revendications précédentes, dans lequel l'élément de montage (30) comprend une troisième ouverture (32) configurée sous la forme d'un deuxième boîtier de palier adapté pour recevoir un palier d'arbre d'entraînement.

7. Élément de montage (30) de la revendication 7, dans lequel la troisième ouverture (32) s'étend dans une direction essentiellement perpendiculaire à la première ouverture (31).

8. Ensemble différentiel (1) comprenant :
un support de différentiel (10) ;
un élément de montage (30) de l'une quelconque des revendications 1 à 8, l'élément de montage (30) étant attaché de manière amovible au support de différentiel (10) ;
une boîte de différentiel (20) qui est supportée en rotation par un palier de boîte de différentiel (21b) pour une rotation autour d'un axe de différentiel, le palier de boîte de différentiel (21b) étant reçu dans la première ouverture (31) de l'élément de montage (30) ;
un ensemble verrou de différentiel (50) comprenant un actionneur linéaire avec une tige de piston (53), une première extrémité (53a) de la tige de piston étant reçue dans la deuxième ouverture (33) pour un mouvement longitudinal de la tige de piston (53) entre des états ouvert et fermé de l'ensemble verrou de différentiel (50) .

9. Ensemble différentiel (1) de la revendication 8 ou 9, dans lequel l'ensemble verrou de différentiel (1) comprend un piston (52) attaché à une deuxième extrémité (53b) de la tige de piston (53), opposée à la première extrémité (53a) de la tige de piston (53).

10. Ensemble différentiel (1) de la revendication 10, dans lequel le piston (52) est reçu dans un cylindre de l'ensemble verrou de différentiel, et dans lequel ledit cylindre (51) est une partie intégrale du support de différentiel.

11. Ensemble différentiel (1) de l'une quelconque des revendications 9 à 11, dans lequel l'ensemble différentiel (1) comprend un pignon d'entrée (40) ayant un engrenage de pignon (42) engrené avec une couronne dentée (24) de la boîte de différentiel (20) et un bout uni (47) dépassant d'une extrémité avant de l'engrenage de pignon (42), et dans lequel l'élément de montage comprend une troisième ouverture (32) configurée sous la forme d'un deuxième boîtier de palier, le bout uni (47) étant reçu dans un palier de bout uni pour une rotation autour d'un axe d'arbre d'entraînement, le palier de bout uni étant reçu dans la troisième ouverture (32).

12. Ensemble différentiel (1) de la revendication 12, dans lequel l'axe de pignon d'entraînement s'étend dans une direction essentiellement perpendiculaire à l'axe de différentiel.

13. Procédé d'assemblage d'un ensemble support de différentiel, incluant les étapes suivantes : h) la mise à disposition d'un support de différentiel (10) ;
i) la mise à disposition d'un élément de montage (30) comprenant une première (31) et une deuxième (33) ouverture ;
j) la mise à disposition d'une boîte de différentiel (20) et d'au moins un palier de boîte de différentiel (21b) ;
k) la mise à disposition d'un ensemble verrou de différentiel (50) comprenant un actionneur linéaire avec une tige de piston (53) ;
l) l'insertion du palier de boîte de différentiel (21b) conjointement avec la boîte de différentiel (20) dans la première ouverture (31) de l'élément de montage (50) ;
**caractérisé en ce que** le procédé inclut également les étapes suivantes :
m) la fixation de l'élément de montage (50) au support de différentiel (10) ;
n) l'insertion de la tige de piston (33) dans la deuxième ouverture (33) de l'élément de montage (50).

14. Procédé de la revendication 14, dans lequel l'élément de montage (50) comprend une troisième ouverture (32), s'étendant perpendiculairement à la première ouverture (31), et dans lequel le procédé inclut l'insertion d'un bout uni (47) d'un pignon d'entrée (40) conjointement avec un palier de bout uni dans la troisième ouverture (32), après la fixation de l'élément de montage (50) au support de différentiel (10) .
